# EUROPÄISCHE PATENTSCHRIFT

(11) **EP 2 468 550 B1**
(45) Veröffentlichungstag und Bekanntmachung des Hinweises auf die Patenterteilung: **07.10.2015**
(21) Anmeldenummer: 11010070.8
(22) Anmeldetag: 21.12.2011
(51) Int. Cl.: B60J 7/22

(54) **Cabriolet-Fahrzeug mit einem Luftströmungsleitelement**
Convertible vehicle with a wind deflector
Véhicule cabriolet muni d'un déflecteur de vent

(30) Priorität: 21.12.2010 DE 102010055578
(43) Veröffentlichungstag der Anmeldung: 27.06.2012
(73) Patentinhaber: Volkswagen Aktiengesellschaft, 38440 Wolfsburg (DE)
(72) Erfinder: Reichelt, Ralf, 38531 Rötgesbüttel (DE)

(56) Entgegenhaltungen:
- EP-A1- 0 903 253
- EP-A2- 0 895 889
- DE-A1- 3 833 046
- DE-A1-102006 023 911
- DE-A1-102006 023 912

## Beschreibung

Die Erfindung betrifft ein Cabriolet-Fahrzeug, mit wenigstens einem Luftströmungsleitelement nach dem Oberbegriff des Patentanspruchs 1 der Erfindung.

Ein derartiges Fahrzeug ist aus der DE 38 33 046 A1 bekannt. Hierbei weist ein sogenannter Windabweiser zwei sich parallel entlang einem vorderen Dachquerträger erstreckende, übereinander angeordnete und miteinander verbundene sowie platten- oder tragflächenförmig ausgebildete Luftleitkörper auf. Die einander gegenüberliegenden Innenflächen derselben verlaufen nach Fahrzeug-hinten gesehen in Richtung der Luftströmung düsenförmig aufeinander zu, wodurch der von einer Frontscheibe kommende Luftstrom beschleunigt wird. Durch diese Maßnahme soll die herkömmlich sich ausbildende Luftverwirbelung, die einen oft als unangenehm empfundenen Zug im Cabriolet-Fahrzeug hervorruft, soweit nach hinten verlagert werden, dass sie die Fahrzeuginsassen nicht mehr erfasst. Es kann des Weiteren eine Einrichtung vorgesehen sein, mit der der Winkel, mit dem die Innenflächen der Luftleitkörper zueinander verlaufen, verstellbar ist, um das Ausmaß der Düsenwirkung des Windabweisers einstellen zu können. Die EP 0 895 889 A2 offenbart des Weiteren Luftströmungsleitelemente, die ihrerseits entweder oberhalb der Kante der Windschutzscheibe eines Cabrio-Fahrzeugs angeordnet oder in einen besagte Kante begrenzenden vorderen Dachquerträger ein- und ausfahrbar sind. Überdies wird ein Luftströmungsleitelement vorgeschlagen, welches zwischen einer unteren Luftstromleitfläche desselben und der Frontseite der Windschutzscheibe einen Kanal mit Düsenwirkung bildet. Durch die Ausbildung des Luftströmungsleitelements als Tragflächenprofil soll eine gezielte Lenkung des Luftstroms möglich sein.

Aufgabe der Erfindung ist es, ein Cabriolet-Fahrzeug mit wenigstens einem zum Stand der Technik alternativen Lufströmungsleitelement zu schaffen, vermittels welchem bei offenem Cabriolet-Verdeck der Luftstrom effektiv über die Fahrzeuginsassen hinweg geleitet und für die Fahrzeuginsassen unangenehmer Lufteintritt mit Luftturbulenzen in den Fahrzeuginnenraum wirkungsvoll vermieden wird.

Ausgehend von einem Cabriolet-Fahrzeug, mit wenigstens einem Luftströmungsleitelement, das sich zumindest abschnittsweise entlang eines vorderen Dachquerträgers erstreckt und durch ein im Fahrbetrieb des Fahrzeugs ober- und unterseitig luftumströmtes Profil gebildet ist, wird die gestellte Aufgabe dadurch gelöst, dass das wenigstens eine Luftströmungsleitelement in Fahrzeuglängsrichtung (X-Richtung) gesehen zumindest abschnittsweise innerhalb eines hohlprofilartigen Gehäuses angeordnet ist, welches zur Gewährleistung einer Beaufschlagung des Luftströmungsleitelements mit strömender Luft wenigstens eine fahrzeugfrontseitig angeordnete Lufteintrittsöffnung und wenigstens eine fahrzeugheckseitig angeordnete Luftaustrittsöffnung aufweist.

Durch diese erfindungsgemäße Lösung ist vorteilhaft mit geringem technischen Aufwand und bei Beanspruchung geringen Bauraums eine hochwirksame Lenkung des Luftstroms über den Fahrzeuginnenraum hinweg ohne Erzeugung nachteiliger Luftturbulenzen respektive Luftverwirbelungen innerhalb desselben ermöglicht, welches wiederum mit einer Reduzierung der Geräusche im Fahrzeug einhergeht. Diese Lösung ermöglicht des Weiteren ein Fahren des Cabriolet-Fahrzeugs mit hohen Geschwindigkeiten ohne Beeinträchtigung der Fahrzeuginsassen infolge besagter Luftverwirbelungen. Darüber hinaus ist durch diese Maßnahme das herkömmlich hinter den Fahrzeugsitzen angeordnete Windschott entbehrlich.

Die Unteransprüche beschreiben bevorzugte Weiterbildungen oder Ausgestaltungen der Erfindung.

Danach kann das Gehäuse gemäß einer ersten vorteilhaften Ausgestaltungsvariante als ein zum vorderen Dachquerträger separates Bauteil ausgebildet und am vorderen Dachquerträger befestigt sein oder gemäß einer zweiten vorteilhaften Ausgestaltungsvariante mit geringstem Bauraumbedarf durch den vorderen Dachquerträger selbst gebildet sein. Weiter vorteilhaft kann das im Fahrbetrieb des Fahrzeugs luftumströmte Profil des wenigstens einen Luftströmungsleitelements derart ausgebildet sein und/oder derart zur Strömungsrichtung der Luft ausgerichtet sein, dass die unterseitig desselben sich im Fahrbetrieb des Fahrzeugs ausbildende Luftströmung eine höhere Strömungsgeschwindigkeit "V_{U}" aufweist als die Strömungsgeschwindigkeit "V_{O}" der sich oberseitig des Luftströmungsleitelements ausbildenden (Luftströmung Durch die bewirkte hohe Strömungsgeschwindigkeit "V_{U}" der unterseitig des Profils geführten Luftströmung wird wirkungsvoll ein Eindringen der oberhalb des besagten Profils und des Gehäuses geführten Luftströmungen in den Fahrzeuginnenraum unterbunden.

Es ist sozusagen eine Strömungsbarriere bzgl. besagter oberhalb des Profils und des Gehäuses geführter Luftströmungen geschaffen. Besonders vorteilhaft kann das wenigstens eine Luftströmungsleitelement insbesondere in Abhängigkeit von einer sensierten Fahrzeug-und/oder Luftströmungsgeschwindigkeit "V_{F}", "V_{L}" relativ zum Gehäuse um eine erste Fahrzeugquerachse schwenkbar und/oder in Fahrzeuglängsrichtung (X-Richtung) gesehen verschiebbar ausgebildet sein. Hierdurch kann in Abhängigkeit von der jeweils sensierten Fahrzeuggeschwindigkeit und/oder Luftströmungsgeschwindigkeit "V_{F}", "V_{L}" den sich einstellen bzw. sich ausbildenden unterschiedlichen Luftströmungen am Profil und den sich etwaige einstellenden Luftverwirbelungen Rechnung getragen werden. Insoweit können dem wenigstens einen Luftströmungsleitelement in Abhängigkeit von der sensierten Fahrzeug-und/oder Luftströmungsgeschwindigkeit "V_{F}", "V_{L}" bestimmte Schwenk- und/oder Verschiebestellungen desselben vorgegeben sein, welche vorab errechnet und/oder im Rahmen von Versuchen ermittelt und in einer Steuer- und Regeleinrichtung des Fahrzeugs zur Ansteuerung zumindest eines dem Luftströmungsleitelement zugeordneten Aktuators hinterlegt sein können. Um die Wirkung des Luftströmungsleitelementes noch weiter zu verbessern, kann des Weiteren der vom hohlprofilartigen Gehäuse gebildete und das wenigstens eine Luftströmungsleitelement aufnehmende Hohlraum einen Strömungsquerschnitt aufweisen, der sich von Fahrzeug-vorn nach Fahrzeug-hinten gesehen zumindest abschnittsweise düsenförmig verjüngt. Durch diese Maßnahme ist es gestattet, die Strömungsgeschwindigkeit insbesondere auch der unterseitig des Profils geführten Luftströmung weiter zu erhöhen und demgemäß deren Wirkung im Hinblick auf die Ausbildung besagter Strömungsbarriere noch weiter zu verbessern. Wie die Erfindung noch vorsieht, kann das als separates Bauteil ausgebildete Gehäuse in vorteilhafter Weise um eine zweite Fahrzeugquerachse oder ebenfalls um die erste Fahrzeugquerachse schwenkbar und/oder in den vorderen Dachquerträger ein-und aus demselben wieder ausfahrbar ausgebildet sein. Durch besagtes Schwenken des Gehäuses selbst ist eine vorteilhafte Beeinflussung der dasselbe umströmenden Luft sowie eine definierte Beaufschlagung des innerhalb desselben angeordneten Strömungs-Profils mit dem durch die Lufteintrittsöffnung/en eintretenden Luftstrom gestattet. Überdies kann besagte Schwenkoption des Gehäuses die Montage und Demontage des Cabrio-Verdecks erleichtern, welches auch für die etwaige Ein- und Ausfahroption des Gehäuses samt dem wenigstens einen Luftströmungsleitelement zu verzeichnen ist. Schließlich kann vorgesehen sein, dass ein oder mehrere in Fahrzeugquerrichtung (Y-Richtung) gesehen nebeneinander angeordneten Gehäuse als zum vorderen Dachquerträger separate Bauteile mit je einem oder einer Mehrzahl in Fahrzeugquerrichtung (Y-Richtung) gesehen nebeneinander angeordneten Luftströmungsleitelementen vorgesehen sind. Eine derartige Maßnahme bietet sich insbesondere dann an, wenn der vordere Dachquerträger von einer Fahrzeugseite zur anderen einen gekrümmten Verlauf, beispielsweise einen nach oben und/oder vorn gekrümmten Verlauf aufweist.

Die Erfindung wird nachstehend anhand eines in den Zeichnungen schematisch dargestellten Ausführungsbeispieles näher erläutert. Es zeigen:
- Fig. 1: eine perspektivische Teilansicht eines Cabriolet-Fahrzeugs im Bereich der Frontscheibe, mit einem erfindungsgemäß ausgestatteten Luftströmungsleitelement,
- Fig. 2: die Einzelheit "Z" nach Fig. 1, und
- Fig. 3: den Schnitt "I-I" nach Fig. 1

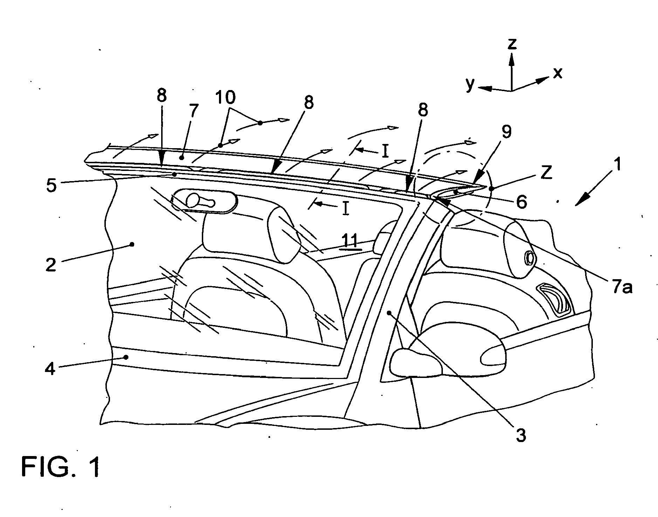

Gemäß Fig. 1 ist ein Cabriolet-Fahrzeug 1 mit offenem und demgemäß nicht näher dargestellten, jedoch an sich bekannten Cabriolet-Verdeck gezeigt, welches seinerseits bekanntermaßen im ebenfalls nicht näher dargestellten Heckbereich des Fahrzeugs 1 abgelegt wird. Des Weiteren ist die Frontscheibe 2 des Cabriolet-Fahrzeugs 1 dargestellt, welche in einem Rahmen gehalten ist, der seinerseits von an sich bekannten A-Säulen 3, einem unteren Scheibenquerträger 4 und einem vorderen Dachquerträger 5 gebildet ist.

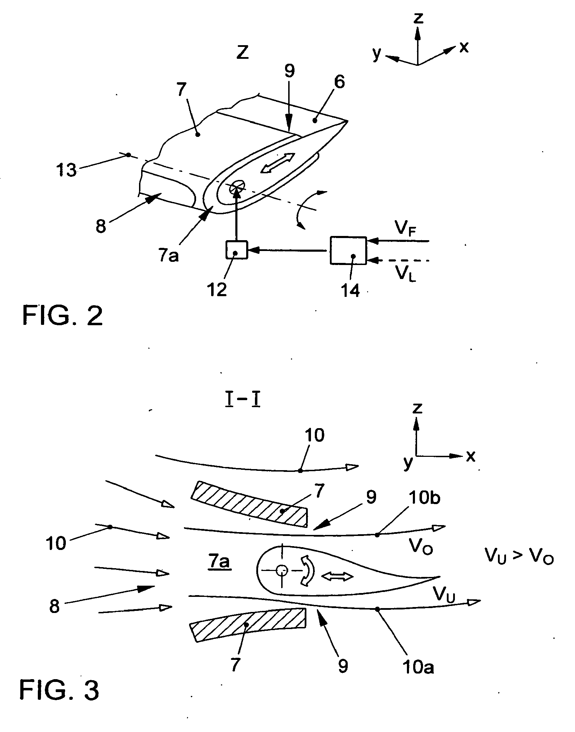

Entlang des vorderen Dachquerträgers 5 erstreckt sich ein Luftströmungsleitelement 6, welches durch ein ober- und unterseitig luftumströmtes Profil gebildet ist. Besagtes Luftströmungsleitelement 6 respektive ober- und unterseitig luftumströmtes Profil ist im Querschnitt gesehen an ein an sich bekanntes strömungsgünstiges Tragflächenprofil angelehnt und in Fahrzeuglängsrichtung (X-Richtung) gesehen mit einem vorderen Abschnitt innerhalb des Hohlraums 7a eines hohlprofilartigen Gehäuses 7 angeordnet. Das Gehäuse 7 weist seinerseits wenigstens eine, vorliegend eine Mehrzahl fahrzeugfrontseitig angeordnete Lufteintrittsöffnungen 8 und wenigstens eine, vorliegend lediglich eine fahrzeugheckseitig angeordnete Luftaustrittsöffnung 9 auf. Besagte Luftein- und Luftaustrittsöffnungen 8, 9 gestatten im Fahrbetrieb des Cabriolet-Fahrzeugs 1 die Beaufschlagung des Luftströmungsleitelements 6 mit strömender Luft 10. Das Luftströmungsleitelement 6 ist von Fahrzeug-hinten oder von der Seite in ein strömungsgünstiges, vorliegend im Querschnitt U-oder V-förmig ausgebildetes Gehäuse 7 eingesetzt und mittels einer Mehrzahl nicht näher dargestellter, jedoch an sich bekannter mechanischer Befestigungselemente in demselben befestigt (vgl. Fig. 1 und 2).

Das als ein zum vorderen Dachquerträger 5 separates Bauteil ausgebildete und an dem Dachquerträger 5 mittels ebenfalls an sich bekannter und demgemäß nicht näher dargestellter mechanischer Befestigungselemente befestigte Gehäuse 7 besteht, wie das Profil des Luftströmungsleitelements 6 auch, vorzugsweise aus einem einfach und kostengünstig zu verarbeitenden Kunststoff und ist beispielsweise durch an sich bekanntes Spritzgießen hergestellt.

Wie bereits oben näher ausgeführt, ist das im Fahrbetrieb des Cabriolet-Fahrzeugs 1 luftumströmte Profil des Luftströmungsleitelements 6 nunmehr derart ausgebildet und/oder derart zur Strömungsrichtung der Luft 10 ausgerichtet, dass die unterseitig des besagten Profils sich im Fahrbetrieb ausbildende Luftströmung 10a eine höhere Strömungs-Geschwindigkeit "V_{U}" aufweist als die Strömungsgeschwindigkeit "V_{O}" der sich oberseitig des Profils des Luftströmungsleitelements 6 ausbildende Luftströmung 10b.

Es soll demnach die Beziehung "V_{U}" > "V_{O}" gelten.

Durch diese Maßnahme wird, wie bereits oben erörtert, eine sogenannte Strömungsbarriere geschaffen, die weitestgehend ohne Verwirbelungen über den Fahrzeuginnenraum 11 reicht und wirkungsvoll ein Eindringen der oberhalb des Gehäuses 7 und oberseitig besagten Profils geführten Luftströmungen 10, 10b in den Fahrzeuginneriraum 11 unterbindet.

Bewirkt werden derartige Luftströmungen10a, 10b beispielsweise durch eine besondere Ausgestaltung des Strömungs-Profils des Luftströmungsleitelements 6, indem dasselbe z. B. asymmetrisch gewölbt ausgebildet wird (vgl. insbes. Fig. 3). Demgegenüber kann das Profil auch symmetrisch ausgebildet sein, d. h., Unter- und Oberseite desselben sind gleich stark gewölbt (vgl. Fig. 1 und 2), wobei dann der Anstellwinkel des Profils zur auf dasselbe auftreffenden Luft 10 in der gewünschten Weise eingestellt wird, um im Sinne der Erfindung ober- und unterseitig des Profils Luftströmungen 10a, 10b mit unterschiedlichen Strömungsgeschwindigkeiten "V_{U}", "V_{O}" zu bewirken.

Ebenso können durch die gewählte Länge des luftumströmten Profils die Eigenschaften der erfindungsgemäß relevanten Luftströmungen 10a, 10b eingestellt werden. Wie insbesondere Fig. 2 zu entnehmen ist, ist im Hinblick auf die gewählte Kontur des Strömungs-Profils des Luftströmungsleitelements 6 auch die Kontur des Gehäuses 7 strömungsgünstig, d. h., tropfenförmig ausgebildet und geht strömungstechnisch sozusagen in die Kontur des Profils des Luftströmungsleitelements 6 über. Durch Verschieben des Luftströmungsleitelements 6 in Fahrzeuglängsrichtung (X-Richtung) ist zum einen eine Verlängerung respektive Verkürzung des aus Gehäuse 7 und Luftströmungsleitelement 6 gebildeten luftumströmten Gesamtprofils und zum anderen eine Verlängerung respektive Verkürzung der Führung der innerhalb des Gehäuses 7 geführten Luftströmungen 10a, 10b gestattet.

Eine Kombination der vorstehenden Maßnahmen, nämlich Verschwenken und Verschieben des Profils des Luftströmungsleitelements 6 relativ zum Gehäuse 7 ist ebenfalls denkbar und somit durch die Erfindung mit erfasst.

Aus der Praxis ist es bekannt, dass sich in Abhängigkeit von unterschiedlichen Fahrzeuggeschwindigkeiten "V_{F}" das Strömungsverhalten der das Fahrzeug 1 und demgemäß auch die Frontscheibe 2 sowie das Gehäuse 7 samt Luftströmungsleitelement 6 überströmenden bzw. umströmenden Luft 10 verändern kann, indem beispielsweise laminare Strömungen früher oder später abreißen und in der Folge sich Luftverwirbelungen oberhalb des Fahrzeuginnenraums 11, innerhalb desselben, hinter dem Fahrzeug 1 oder weit hinter demselben ausbilden können.

Um diesen Umstand angemessen berücksichtigen zu können, ist vorliegend das Luftströmungsleitelement 6 mittels an sich bekannter und demgemäß im Detail nicht näher dargestellter Aktuatoren 12, die beispielsweise elektrischer oder elektro-mechanischer Art sind, relativ zum Gehäuse 7 um eine erste Fahrzeugquerachse 13 schwenkbar und in Fahrzeuglängsrichtung (X-Richtung) gesehen verschiebbar ausgebildet Derartige Maßnahmen zur Strömungsbeeinflussung von strömender Luft 10 sind zwar aus dem Flugzeugbau hinreichend bekannt, jedoch im Hinblick auf den vorliegenden Anwendungsfall im Fahrzeugbau bislang unbekannt geblieben.

Insoweit bietet es sich an, das Luftströmungsleitelement 6 in Abhängigkeit einer sensierten Fahrzeug- und/oder Luftströmungsgeschwindigkeit "V_{F}"; "V_{L}" um besagte erste Fahrzeugquerachse 13 schwenkbar und/oder in Fahrzeuglängsrichtung (X-Richtung) gesehen verschiebbar auszubilden. Zweckmäßigerweise können dabei bzgl. bestimmter Fahrzeug-und/oder Luftströmungsgeschwindigkeiten "V_{F}"; "V_{L}" bestimmte Schwenk- und/oder Verschiebestellungen des Luftströmungsleitelementes 6 vorgegeben werden, welche vorab errechnet und/oder im Rahmen von Versuchen ermittelt und in einer Steuer- und Regeleinrichtung 14 des Fahrzeugs 1 zur Ansteuerung zumindest eines dem Luftströmungsleitelement 6 zugeordneten Aktuators 12 hinterlegt sind (vgl. Fig. 2).

Um die Wirkung des Luftströmungsleitelementes 6 noch weiter zu verbessern, weist der vom hohlprofilartigen Gehäuse 7 gebildete und das Luftströmungsleitelement 6 aufnehmende Hohlraum 7a zumindest abschnittsweise einen Strömungsquerschnitt auf, der sich von Fahrzeug-vorn nach Fahrzeug-hinten gesehen düsenförmig verjüngt (vgl. insbes. Fig. 3). Durch diese Maßnahme ist es gestattet, die Strömungsgeschwindigkeit "V_{U}" insbesondere auch der unterseitig des Profils geführten Luftströmung 10a weiter zu erhöhen und demgemäß deren Wirkung im Hinblick auf die Ausbildung besagter Strömungsbarriere noch weiter zu verbessern.

In Versuchen hat es sich des Weiteren als zweckmäßig erwiesen, das separat ausgebildete Gehäuse 7, ggf. samt dem Luftströmungsleitelement 6 schwenkbar auszubilden. Hierzu kann zum einen eine separate zweite, vorliegend nicht näher dargestellte Fahrzeugquerachse (Schwenkachse) vorgesehen sein oder zum anderen die besagte erste Fahrzeugquerachse 13 als Schwenkachse dienen (nicht näher dargestellt). Auch durch diese Maßnahme ist eine Beeinflussung der Luftströmungen 10, 10a, 10b im Sinne der Erfindung gestattet. Darüber hinaus ist durch diese Maßnahme die Montage und Demontage des Cabriolet-Verdecks erleichtert sowie eine hohe Dichtheit desselben durch aktives Anpressen des Gehäuses 7 an das Cabriolet-Verdeck erzielbar. Weiterhin kann es auch angezeigt sein und ist demgemäß durch die Erfindung mit erfasst, das Gehäuse 7 samt Luftströmungsleitelement 6 in den vorderen Dachquerträger 5 ein- und ausfahrbar auszubilden. Bei geschlossenem Cabriolet-Verdeck ist in diesem Fall das Gehäuse 7 samt Luftströmungsleitelement 6 im vorderen Dachquerträger 5 versenkt und wird erst während oder nach dem Öffnen des Cabriolet-Verdecks in seine bestimmungsgemäße Position ausgefahren (nicht näher dargestellt).

Vorstehendes Ausführungsbeispiel stellt auf ein Cabriolet-Fahrzeug 1 mit einem einzigen Gehäuse 7 und einem einzigen in demselben angeordneten Luftströmungsleitelement 6 ab.

Durch die Erfindung mit erfasst ist jedoch auch ein Gehäuse 7, welches in Fahrzeugquerrichtung (Y-Richtung) gesehen eine Mehrzahl von nebeneinander angeordneten, ggf. separat verschwenkbaren und/oder in Fahrzeuglängsrichtung (X-Richtung) verstellbaren Luftströmungsleitelementen 6 aufweist. Ebenso ist ein Cabriolet-Fahrzeug 1 mit erfasst, welches in Fahrzeugquerrichtung (Y-Richtung) gesehen eine Mehrzahl von nebeneinander angeordneten und ggf. separat verschwenkbaren Gehäusen 7 mit jeweils einem oder einer Mehrzahl Luftströmungsleitelementen 6 aufweist (nicht näher dargestellt). Eine derartige Mehrteiligkeit des Gehäuses 7 und/oder des Luftströmungsleitelementes 6 kann sich insbesondere dann als erforderlich erweisen, wenn der vordere Dachquerträger 5 von einer Fahrzeugseite zur anderen einen gekrümmten Verlauf, beispielsweise einen nach oben und/oder vorn gekrümmten Verlauf aufweist.

Fernerhin ist durch die Erfindung eine im Detail nicht näher dargestellte, jedoch für den Fachmann unschwer nachvollziehbare Ausgestaltungsvariante mit erfasst, bei der das Gehäuse 7 durch einen vorderen hohlprofilartigen Dachquerträger 5 selbst gebildet ist, woraus insbesondere Material-, Kosten- und Gewichtseinsparungen resultieren.

### Bezugszeichenliste

- 1: Cabriolet-Fahrzeug
- 2: Frontscheibe
- 3: A-Säulen
- 4: unterer Scheibenquerträger
- 5: vorderer Dachquerträger
- 6: Luftströmungsleitelement
- 7: Gehäuse
- 7a: Hohlraum (Gehäuse 7)
- 8: Lufteintrittsöffnung
- 9: Luftaustrittsöffnung
- 10: strömende Luft
- 10a: Luftströmung
- 10b: Luftströmung
- 11: Fahrzeuginnenraum
- 12: Aktuator
- 13: Fahrzeugquerachse
- 14: Steuer- und Regeleinrichtung
- "V_{U}": Strömungsgeschwindigkeit (Luftströmung 10a)
- "V_{O}": Strömungsgeschwindigkeit (Luftströmung 10b)
- "V_{F}": Fahrzeuggeschwindigkeit
- "V_{L}": Luftströmungsgeschwindigkeit

## Patentansprüche

1. Cabriolet-Fahrzeug (1), mit wenigstens einem Luftströmungsleitelement (6), das sich zumindest abschnittsweise entlang eines vorderen Dachquerträgers (5) erstreckt und durch ein im Fahrbetrieb des Fahrzeugs (1) ober- und unterseitig luftumströmtes Profil gebildet ist, **dadurch gekennzeichnet, dass** das wenigstens eine Luftströmungsleitelement (6) in Fahrzeuglängsrichtung (X-Richtung) gesehen zumindest abschnittsweise innerhalb eines hohlprofilartigen Gehäuses (7) angeordnet ist, welches zur Gewährleistung einer Beaufschlagung des Luftströmungsleitelements (6) mit strömender Luft (10) wenigstens eine fahrzeugfrontseitig angeordnete Lufteintrittsöffnung (8) und wenigstens eine fahrzeugheckseitig angeordnete Luftaustrittsöffnung (9) aufweist.

2. Cabriolet-Fahrzeug (1) nach Anspruch 1, **dadurch gekennzeichnet, dass** das Gehäuse (7) als ein zum vorderen Dachquerträger (5) separates Bauteil ausgebildet und am vorderen Dachquerträger (5) befestigt ist oder durch den vorderen Dachquerträger (5) selbst gebildet ist.

3. Cabriolet-Fahrzeug (1) nach Anspruch 1 oder 2, **dadurch gekennzeichnet, dass** das im Fahrbetrieb des Fahrzeugs (1) luftumströmte Profil des wenigstens einen Luftströmungsleitelements (6) derart ausgebildet ist und/oder derart zur Strömungsrichtung der Luft (10) ausgerichtet ist, dass die unterseitig desselben sich im Fahrbetrieb des Fahrzeugs (1) ausbildende Luftströmung (10a) eine höhere Strömungsgeschwindigkeit "V_{U}" aufweist als die Strömungsgeschwindigkeit "Vₒ" der sich oberseitig des Luftströmungsleitelements (6) ausbildenden Luftströmung (10b).

4. Cabriolet-Fahrzeug (1) nach einem der Ansprüche 1 bis 3, **dadurch gekennzeichnet, dass** das wenigstens eine Luftströmungsleitelement (6) relativ zum Gehäuse (7) um eine erste Fahrzeugquerachse (13) schwenkbar und/oder in Fahrzeuglängsrichtung (X-Richtung) gesehen verschiebbar ausgebildet ist.

5. Cabriolet-Fahrzeug (1) nach Anspruch 4, **dadurch gekennzeichnet, dass** das wenigstens eine Luftströmungsleitelement (6) in Abhängigkeit von einer sensierten Fahrzeug- und/oder Luftströmungsgeschwindigkeit "V_{F}", "V_{L}" schwenkbar und/oder verschiebbar ist.

6. Cabriolet-Fahrzeug (1) nach Anspruch 5, **dadurch gekennzeichnet, dass** dem wenigstens einen Luftströmungsleitelement (6) in Abhängigkeit von der sensierten Fahrzeug- und/oder Luftströmungsgeschwindigkeit "V_{F}", "V_{L}" bestimmte Schwenk-und/oder Verschiebestellungen desselben vorgegeben sind.

7. Cabriolet-Fahrzeug (1) nach Anspruch 6, **dadurch gekennzeichnet, dass** die jeweilige Schwenk- und/oder Verschiebestellung des wenigstens einen Luftströmungsleitelement (6) errechnet und/oder im Rahmen von Versuchen ermittelt und in einer Steuer- und Regeleinrichtung (14) des Fahrzeugs (1) zur Ansteuerung zumindest eines dem Luftströmungsleitelement (6) zugeordneten Aktuators (12) hinterlegt ist.

8. Cabriolet-Fahrzeug (1) nach einem der Ansprüche 1 bis 7, **dadurch gekennzeichnet, dass** der vom hohlprofilartigen Gehäuse (7) gebildete und das wenigstens eine Luftströmungsleitelement (6) aufnehmende Hohlraum (7a) einen Strömungsquerschnitt aufweist, der sich von Fahrzeug-vorn nach Fahrzeug-hinten gesehen zumindest abschnittsweise düsenförmig verjüngt.

9. Cabriolet-Fahrzeug (1) nach einem der Ansprüche 1 bis 8, **dadurch gekennzeichnet, dass** das als separates Bauteil ausgebildete Gehäuse (7) um eine zweite Fahrzeugquerachse oder ebenfalls um die erste Fahrzeugquerachse (13) schwenkbar ist und/oder in den vorderen Dachquerträger (5) ein- und aus demselben wieder ausfahrbar ausgebildet ist.

10. Cabriolet-Fahrzeug (1) nach einem der Ansprüche 2 bis 9, **dadurch gekennzeichnet, dass** ein oder mehrere in Fahrzeugquerrichtung (Y-Richtung) gesehen nebeneinander angeordneten Gehäuse (7) als zum vorderen Dachquerträger (5) separate Bauteile mit je einem oder einer Mehrzahl in Fahrzeugquerrichtung (Y-Richtung) gesehen nebeneinander angeordneten Luftströmungsleitelementen (6) vorgesehen sind.

## Claims

1. Convertible vehicle (1) with at least one air flow guiding element (6) which extends at least in sections along a front roof cross member (5) and is formed by a profile around which air flows on the upper and lower side in the driving mode of the vehicle (1), **characterized in that** the at least one air flow guiding element (6), as seen in the longitudinal direction (X direction) of the vehicle, is arranged at least in sections within a housing (7) which is formed in the manner of a hollow profile and which, in order to ensure that the air flow guiding element (6) is acted upon by flowing air (10), has at least one air inlet opening (8) arranged so as to point towards the front side of the vehicle and at least one air outlet opening (9) arranged so as to point towards the rear side of the vehicle.

2. Convertible vehicle (1) according to Claim 1, **characterized in that** the housing (7) is designed as a component which is separate from the front roof cross member (5) and is fastened to the front roof cross member (5), or is formed by the front roof cross member (5) itself.

3. Convertible vehicle (1) according to Claim 1 or 2, **characterized in that** the profile of the at least one air flow guiding element (6), around which profile air flows in the driving mode of the vehicle (1), is designed in such a manner and/or is aligned with respect to the flow direction of the air (10) in such a manner that the air flow (10a) forming on the lower side of the said profile in the driving mode of the vehicle (1) has a higher flow velocity in "Vᵤ" than the flow velocity "Vₒ" of the air flow (10b) forming on the upper side of the air flow guiding element (6).

4. Convertible vehicle (1) according to one of Claims 1 to 3, **characterized in that** the at least one air flow guiding element (6) is designed to be pivotable about a first transverse axis (13) of the vehicle and/or to be displaceable, as seen in the longitudinal direction (X direction) of the vehicle, relative to the housing (7).

5. Convertible vehicle (1) according to Claim 4, **characterized in that** the at least one air flow guiding element (6) is pivotable and/or displaceable depending on a sensed vehicle and/or air flow velocity "V_{F}", "V_{L}".

6. Convertible vehicle (1) according to Claim 5, **characterized in that** specific pivoting and/or displacement positions of the at least one air flow guiding element (6) are predetermined for the latter depending on the sensed vehicle and/or air flow velocity "V_{F}", "V_{L}".

7. Convertible vehicle (1) according to Claim 6, **characterized in that** the respective pivoting and/or displacement position of the at least one air flow guiding element (6) is calculated and/or is determined within the scope of tests and is stored in a control and regulating device (14) of the vehicle (1) in order to activate at least one actuator (12) assigned to the air flow guiding element (6).

8. Convertible vehicle (1) according to one of Claims 1 to 7, **characterized in that** the cavity (7a) which is formed by the housing (7), which is in the manner of a hollow profile, and receives the at least one air flow guiding element (6) has a flow cross section which tapers at least in sections in a nozzle-shaped manner from the front of the vehicle to the rear of the vehicle.

9. Convertible vehicle (1) according to one of Claims 1 to 8, **characterized in that** the housing (7) which is designed as a separate component is pivotable about a second transverse axis of the vehicle or likewise about the first transverse axis (13) of the vehicle and/or is designed to be retractable into the front roof cross member (5) and to be extendable again therefrom.

10. Convertible vehicle (1) according to one of Claims 2 to 9, **characterized in that** one or more housings (7) arranged next to one another as seen in the transverse direction (Y direction) of the vehicle, are provided as components which are separate from the front roof cross member (5) and each have one or more air flow guiding elements (6) arranged next to one another, as seen in the transverse direction (Y direction) of the vehicle.

## Revendications

1. Véhicule cabriolet (1), avec au moins un déflecteur de vent (6), qui s'étend au moins localement le long d'une traverse de toit antérieure (5) et qui est formé par un profilé balayé par l'air sur la face supérieure et inférieure dans la direction de marche du véhicule (1), **caractérisé en ce qu'**au moins un déflecteur de vent (6), considéré dans la direction longitudinale du véhicule (direction X), est disposé au moins localement à l'intérieur d'un boîtier (7) de type profilé creux qui, pour garantir une exposition du déflecteur de vent (6) au courant d'air (10), présente au moins une ouverture d'entrée d'air (8) orientée vers le côté avant du véhicule et au moins une sortie d'air (9) orientée vers le côté arrière du véhicule.

2. Véhicule cabriolet (1) selon la revendication 1, **caractérisé en ce que** le boîtier (7) est réalisé en tant que composant séparé de la traverse de toit antérieure (5) et il est fixé à la traverse de toit antérieure (5) ou il est formé par la traverse de toit antérieure (5) elle-même.

3. Véhicule cabriolet (1) selon la revendication 1 ou 2, **caractérisé en ce que** le profilé dudit au moins un déflecteur de vent (6) balayé par l'air pendant la marche du véhicule (1) est configuré de telle manière et/ou orienté par rapport à la direction d'écoulement de l'air (10) de telle manière que l'écoulement d'air (10a) qui se forme du côté inférieur de celui-ci pendant la marche du véhicule (1) présente une vitesse d'écoulement "V_{U}" plus élevée que la vitesse d'écoulement "V_{O}" de l'écoulement d'air (10b) qui se forme du côté supérieur du déflecteur de vent (6).

4. Véhicule cabriolet (1) selon l'une quelconque des revendications 1 à 3, **caractérisé en ce que** ledit au moins un déflecteur de vent (6) peut pivoter par rapport au boîtier (7) autour d'un premier axe transversal (13) du véhicule et/ou est réalisé de façon déplaçable, vu dans la direction longitudinale du véhicule (direction X).

5. Véhicule cabriolet (1) selon la revendication 4, **caractérisé en ce que** ledit au moins un déflecteur de vent (6) peut pivoter et/ou se déplacer en fonction d'une vitesse détectée du véhicule et/ou de l'écoulement d'air "V_{F}", "V_{L}".

6. Véhicule cabriolet (1) selon la revendication 5, **caractérisé en ce que** des positions de pivotement et/ou de déplacement définies sont prédéterminées pour ledit au moins un déflecteur de vent (6) en fonction de la vitesse détectée du véhicule et/ou de l'écoulement d'air "V_{F}", V_{L}".

7. Véhicule cabriolet (1) selon la revendication 6, **caractérisé en ce que** la position de pivotement et/ou de déplacement respective dudit au moins un déflecteur de vent (6) est calculée et/ou déterminée dans le cadre d'essais et elle est mémorisée dans un système de commande et de régulation (14) du véhicule (1) pour la commande d'au moins un actionneur (12) associé au déflecteur de vent (6).

8. Véhicule cabriolet (1) selon l'une quelconque des revendications 1 à 7, **caractérisé en ce que** l'espace creux (7a) formé par le boîtier en profilé creux (7) et contenant ledit au moins déflecteur de vent (6) présente une section transversale d'écoulement, qui se rétrécit au moins localement en forme de buse, en la considérant de l'avant du véhicule vers l'arrière du véhicule.

9. Véhicule cabriolet (1) selon l'une quelconque des revendications 1 à 8, **caractérisé en ce que** le boîtier (7) réalisé en tant que composant séparé peut pivoter autour d'un deuxième axe transversal du véhicule ou également autour du premier axe transversal (13) du véhicule et il peut être rentré dans la traverse de toit antérieure (5) et de nouveau sorti de celle-ci.

10. Véhicule cabriolet (1) selon l'une quelconque des revendications 2 à 9, **caractérisé en ce qu'**il est prévu un ou plusieurs boîtier(s) (7), disposés l'un à côté de l'autre en les considérant dans la direction transversale du véhicule (direction Y) en tant que composants séparés pour la traverse de toit antérieure (5) avec chaque fois un ou une multiplicité de déflecteurs de vent (6) disposés l'un à côté de l'autre en les considérant dans la direction transversale du véhicule (direction Y).
